# FASCICULE DE BREVET EUROPEEN

(11) **EP 3 457 471 B1**
(45) Date de publication et mention de la délivrance du brevet: **19.02.2020**
(21) Numéro de dépôt: 18194088.3
(22) Date de dépôt: 12.09.2018
(51) Int. Cl.: H01M 4/136, H01M 4/1397, H01M 4/58, H01M 4/62, H01M 10/052, H01M 4/38, H01M 4/04, H01M 4/36, H01M 4/02, C01B 32/16

(54) **PROCEDE DE FABRICATION D'UNE ELECTRODE POUR ACCUMULATEUR LITHIUM-SOUFRE A SURFACE ACTIVE IMPORTANTE**
HERSTELLUNGSVERFAHREN EINER ELEKTRODE FÜR EINEN LITHIUM-SCHWEFEL-AKKU MIT EINER GROSSEN AKTIVEN OBERFLÄCHE
METHOD OF MANUFACTURING A LITHIUM-SULPHUR BATTERY ELECTRODE WITH A LARGE ACTIVE SURFACE AREA

(30) Priorité: 15.09.2017 FR 1758591
(43) Date de publication de la demande: 20.03.2019
(73) Titulaire: Commissariat à l'énergie atomique et aux énergies alternatives, 75015 Paris (FR)
(72) Inventeur: BARCHASZ, Céline, 38600 FONTAINE (FR); BOLLOLI, Marco, 38100 GRENOBLE (FR); VINCENT, Rémi, 38000 GRENOBLE (FR)
(74) Mandataire: Brevalex

(56) Documents cités:
- WO-A1-2017/143549
- CN-A- 104 779 376
- CN-A- 104 779 379
- CN-A- 105 826 540
- US-A1- 2013 244 097
- US-A1- 2014 106 239

## Description

### DOMAINE TECHNIQUE

La présente invention a trait à un procédé de préparation d'une électrode positive pour accumulateur électrochimique lithium-soufre à surface active importante.

La présente invention a également trait à un accumulateur électrochimique lithium-soufre comprenant une telle électrode.

Le domaine général de l'invention peut ainsi être défini comme celui des dispositifs de stockage d'énergie, en particulier celui des accumulateurs électrochimiques au lithium et, encore plus particulièrement, des accumulateurs électrochimiques au lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des accumulateurs de ce type les plus usités actuellement sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Du fait que le lithium est un élément solide particulièrement léger et présente un potentiel électrochimique le plus faible, permettant ainsi l'accès à une densité d'énergie massique intéressante, les accumulateurs au lithium ont détrôné largement les autres accumulateurs mentionnés ci-dessus du fait de l'amélioration continue des performances des accumulateurs Li-ion en termes de densité d'énergie. En effet, les accumulateurs lithium-ion permettent d'obtenir des densités d'énergie massique (pouvant atteindre aujourd'hui près de 200 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en œuvre comme matériaux d'électrode le couple LiCoO₂/graphite contre une tension nominale de l'ordre de 1,5 V pour les autres accumulateurs susmentionnés). Ces systèmes présentent également une faible autodécharge et une durée de vie élevée (allant de 500 à 1000 cycles, par exemple).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner.

Actuellement, une nouvelle technologie d'accumulateur à base de lithium se profile comme une alternative prometteuse, cette technologie étant la technologie lithium/soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh/g pour le soufre au lieu de 140 mAh/g pour LiCoO₂). Qui plus est, le soufre est présent, de manière abondante, sur la planète et se caractérise, de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium-soufre peuvent permettre d'atteindre des densités d'énergie massique pouvant aller de 300 à 600 Wh.g⁻¹.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (Ss + 16e⁻ → 8S²⁻) et de la réaction d'oxydation du lithium à l'électrode négative (Li → Li⁺₊e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque la batterie est à l'état de charge complet), la matière active, qui est du soufre élémentaire, est présente à l'état solide dans l'électrode positive. Au cours de la réduction du soufre, c'est-à-dire au cours de la décharge, les molécules cycliques de soufre sont réduites et forment des chaînes linéaires de polysulfures de lithium, de formule générale Li₂Sₙ, avec n pouvant aller de 2 à 8. Puisque la molécule de départ est S₈, les premiers composés formés sont les polysulfures de lithium à chaînes longues, tels que L₂S₈ ou Li₂S₆. Ces polysulfures de lithium étant solubles dans les électrolytes organiques, la première étape de décharge consiste donc en la solubilisation de la matière active dans l'électrolyte et la production de polysulfures de lithium à chaînes longues en solution. Puis, au fur et à mesure que la réduction du soufre se poursuit, la longueur de chaîne des polysulfures est graduellement réduite et des composés tels que Li₂S₈, Li₂S₆ ou encore Li₂S₄ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation du matériau actif soufré Li₂S.

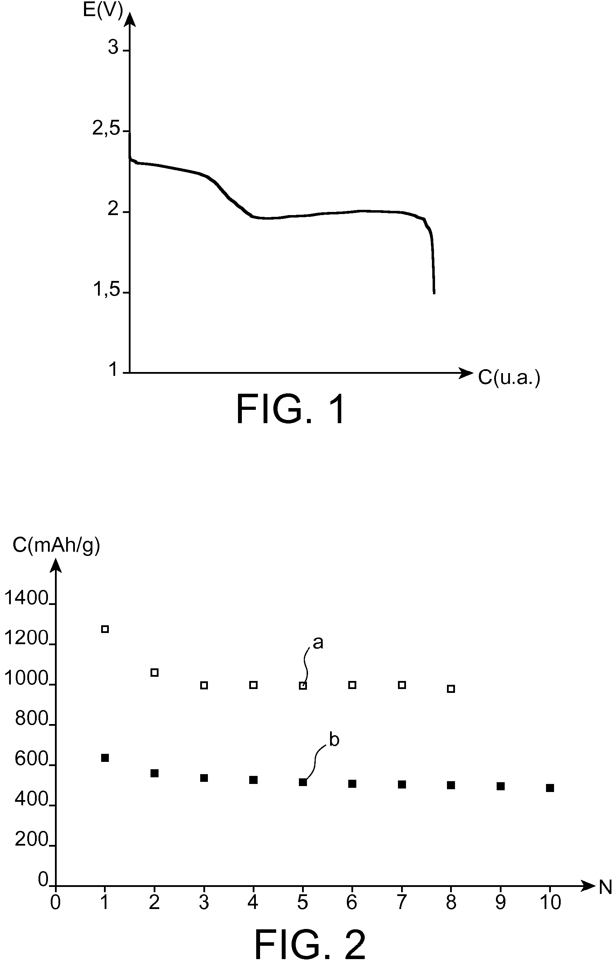

Ce mécanisme peut être corrélé au profil de décharge illustré sur la figure 1, qui représente un graphique illustrant l'évolution du potentiel E (en V) en fonction de la capacité C (en u.a).

En effet, dans ce profil, le premier plateau peut être attribué à la formation des chaînes longues de polysulfures de lithium, alors que le second plateau correspond à la réduction de la taille des chaînes soufrées, jusqu'à passivation de l'électrode positive.

Toutefois, les accumulateurs lithium-soufre présentent un certain nombre d'inconvénients.

La première limitation est d'ordre cinétique, puisque le soufre est un matériau isolant. Le soufre est également soluble dans les électrolytes organiques employés. Ainsi solubilisé, il peut contribuer à engendrer la corrosion de l'électrode négative de lithium et est responsable de l'autodécharge importante des accumulateurs lithium-soufre.

Les intermédiaires polysulfures sont également solubles dans l'électrolyte et susceptibles de réagir avec l'électrode négative. Ils favorisent donc aussi l'autodécharge de l'accumulateur. En outre, ils sont responsables de la mise en place d'un mécanisme navette qui se produit en charge et qui entraîne la dégradation des performances de l'accumulateur, notamment en termes d'efficacité coulombique. Enfin, le produit de décharge Li₂S est, quant à lui, insoluble dans l'électrolyte et isolant électronique. Il précipite donc en fin de décharge et passive la surface des électrodes, qui deviennent alors électrochimiquement bloquantes. De ce fait, les capacités pratiques obtenues peuvent être généralement très en-deçà de la capacité théorique, de l'ordre de 300 à 1000 mAh.g⁻¹ (la capacité théorique étant de l'ordre de 1675 mAh.g⁻¹).

Aussi, des améliorations sont à apporter concernant l'architecture des accumulateurs, par exemple, au niveau de l'électrode positive à base de soufre.

D'un point de vue structurel, un accumulateur lithium/soufre comprend, classiquement, au moins une cellule électrochimique comportant deux électrodes à base de matériaux différents (une électrode positive comprenant, comme matériau actif, du soufre élémentaire et une électrode négative comprenant, comme matériau actif, du lithium métallique), entre lesquelles est disposé un électrolyte liquide organique.

Concernant l'électrode positive comprenant du soufre, celle-ci est classiquement obtenue par un procédé d'enduction sur un substrat qui constitue le collecteur de courant, pour donner un ensemble formé de deux pièces constituées par le collecteur de courant et l'électrode positive en tant que telle. Plus spécifiquement, il est réalisé, dans un premier temps, une encre comprenant un solvant, le matériau actif, un matériau carboné (pour améliorer la conductivité électronique globale de l'électrode) et un liant. L'encre est déposée, dans un deuxième temps, sur un substrat destiné à constituer le collecteur de courant, qui est, généralement, une feuille métallique (comme un feuillard en aluminium). Après évaporation du solvant et séchage, une électrode comprenant du soufre déposée sur une collecteur de courant est ainsi obtenue, l'ensemble résultant étant ensuite incorporé dans une cellule comprenant un séparateur imprégné d'électrolyte liquide organique, une électrode négative, l'électrode négative et l'électrode positive étant disposées, de part et d'autre du séparateur. Le pourcentage de soufre dans l'électrode est généralement important, généralement de 50 à 90% et, préférentiellement, supérieure à 70% en masse, de sorte à obtenir des accumulateurs à forte densité d'énergie.

Le mécanisme de décharge d'un accumulateur lithium-soufre utilisant une telle électrode positive passe tout d'abord par une étape de dissolution du matériau actif, ce qui entraîne un effondrement de la structure initiale de l'électrode poreuse en raison du pourcentage important de soufre dans l'électrode. Après dissolution du soufre, la porosité de l'électrode est telle que la structure ne peut être maintenue et s'effondre. La surface disponible d'électrode est ainsi diminuée et des grains de matériau ou de composite carbone/liant peuvent être désolidarisés du support constitué par le collecteur de courant. Cet endommagement et cette perte de surface active résultante s'avèrent cruciaux en fin de décharge, car les espèces formées (en particulier Li₂S) sont à la fois très isolantes et insolubles dans l'électrolyte organique. Par conséquent, elles précipitent à l'électrode positive et sont responsables de sa passivation progressive. Or, l'épaisseur de matière déposée étant limitée à quelques nanomètres (Li₂S isolant et donc passivant), le dépôt d'une quantité importante de matériau actif dépend donc de la surface spécifique conductrice d'électrode disponible.

De plus, le composé final de décharge Li₂S est deux fois plus volumineux que le soufre, ce qui peut également contribuer à la pulvérisation de la structure d'électrode positive en fin de décharge. En conclusion, les cycles de dissolution/précipitation du matériau actif inhérents au mécanisme de décharge sont donc responsables de la faible capacité pratique restituée et de la faible tenue en cyclage des accumulateurs lithium-soufre.

Pour éviter la pulvérisation de l'électrode, l'idée serait de renforcer les propriétés mécaniques de celle-ci, ce qui a été proposé par Yiwen Ma et al. (Scientific Reports, 5, 2015, 14949, Lithium Sulfur Primary Battery with Super High Energy Density : Based on the Cauliflower-like structured C/S Cathode) en agglomérant, dans un premier temps, des particules de carbone (par exemple, du noir de carbone de la marque Ketjenblack®) avec un liant (par exemple, de la gélatine) puis les particules agglomérées sont ensuite soumises à un traitement de carbonisation et peuvent être utilisées comme matériau actif avec une quantité modérée de liant, les auteurs ayant toutefois uniquement utilisé ces particules dans un contexte de pile primaire, qui n'est donc pas soumis à des régimes de cyclage.

Qui plus est, lorsqu'il s'agit de travailler à la conception d'électrodes positives à surface active élevée, ce qui passe notamment par l'utilisation d'un additif carboné à surface active élevée comme du noir de carbone, il s'avère que la conception peut être difficile notamment en raison de l'apparition de craquelures lors du séchage de l'encre comprenant cet additif. Ce phénomène peut être jugulé en tout ou partie en augmentant la teneur en liant organique de l'encre. Toutefois, l'ajout d'une quantité importante de liant se fait au détriment de l'ajout de matériau actif (en l'occurrence, du soufre pour les accumulateurs lithium-soufre) et s'immobilise généralement à la surface des particules de carbone. Un ajout trop important de liant diminue donc considérablement l'intérêt d'utiliser des additifs carbonés à haute surface spécifique, puisque la porosité utile se retrouve bouchée et inaccessible au soufre.

Au vu de ce qui existe, les auteurs de la présente invention se sont donc proposé de mettre au point un nouveau procédé de préparation d'une électrode positive pour batterie lithium-soufre, qui permette, notamment, d'assurer la cohésion de celle-ci au cours des cyclages de la batterie tout en présentant une surface spécifique importante.

### EXPOSÉ DE L'INVENTION

Ainsi, l'invention a trait à un procédé de préparation d'une électrode positive pour batterie lithium-soufre comprenant les étapes suivantes :
a) une étape de préparation d'un premier mélange par mise en contact d'un additif carboné du type noir de carbone et/ou carbone activé ; d'un additif carboné choisi parmi les nanotubes de carbone, les fibres de carbone et les mélanges de ceux-ci ; d'un liant organique carboné et d'un solvant ;
b) une étape de carbonisation dudit mélange, moyennant quoi il résulte une poudre comprenant des agglomérats de noir de carbone et/ou carbone activé et de nanotubes de carbone et/ou fibres de carbone ;
c) une étape de mise en contact de la poudre obtenue en b) avec du soufre formant ainsi un deuxième mélange ;
d) une étape de mise en dispersion dudit deuxième mélange dans un liant organique ;
e) une étape de dépôt sur un substrat de la dispersion ainsi obtenue ; et
f) une étape de séchage de ladite dispersion ainsi déposée.

Par la mise en œuvre d'un tel procédé, impliquant la formation d'une poudre comprenant des agglomérats de noir de carbone et/ou carbone activé et de nanotubes de carbone et/ou fibres de carbone, qui est ainsi une poudre renforcée mécaniquement, il est évité le phénomène de craquelure, qui interviendrait lors de l'étape de séchage d'une suspension comprenant du noir de carbone, un liant et un solvant organique. Qui plus est, outre le fait d'éviter ce phénomène de craquelure, le procédé permet l'obtention d'une électrode positive présentant une excellente tenue mécanique et une surface active importante et apte à subir sans dégradation un grand nombre de cycle de dissolution de la matière active.

Le procédé de l'invention comprend, tout d'abord une étape de préparation d'un premier mélange par mise en contact d'un additif carboné du type noir de carbone et/ou carbone activé, d'un additif carboné choisi parmi les nanotubes de carbone, les fibres de carbone et les mélanges de ceux-ci, d'un liant organique carboné et d'un solvant.

L'additif carboné du premier mélange peut être du noir de carbone et plus spécifiquement une poudre de noir de carbone, cet additif étant notamment destiné à assurer la conduction électrique au sein de l'électrode positive. Du fait qu'il se présente sous forme de poudre, il se caractérise par une surface spécifique élevée, telle qu'une surface spécifique supérieure à 1000 m²/g.

A titre d'exemples de noir de carbone, on peut citer ceux vendus sous les marques Ketjenblack® (AzkoNobel), Vulcan® (Cabot), Super-P® (Timcal).

Concernant le carbone activé, il s'agit, avantageusement, d'un carbone à structure poreuse constitué de particules sphéroïdales de quelques micromètres de diamètre (et plus spécifiquement, de 2 à 15 micromètres et encore plus spécifiquement de l'ordre de 10 micromètres) comprenant des pores (spécifiquement de 1 à 100 nm et, encore plus spécifiquement de 10 à 50 nm) et à forte surface spécifique développée avec typiquement une surface spécifique allant de 800 à 1800 m²/g.

En outre, le premier mélange comprend au moins un autre additif carboné que celui défini ci-dessus, qui est choisi parmi les nanotubes de carbone, les fibres de carbone et les mélanges de ceux-ci.

Concernant les nanotubes de carbone, il peut s'agir de nanotubes de carbone monofeuillets (ou SWNT) ou de nanotubes de carbone multifeuillets (ou MWNT).

Concernant les fibres de carbone, il peut s'agir de fibres de carbone broyées, de fibres de carbone obtenues en phase vapeur ou des mélanges de celles-ci.

Les fibres de carbone broyées peuvent présenter notamment une longueur allant de 100 µm à 1 mm.

Les fibres de carbone obtenues en phase vapeur peuvent être celles vendues sous la marque VGCF®.

Les fibres de carbone utilisées présentent, avantageusement une longueur inférieure à celle des fibres couramment utilisées dans les procédés traditionnels pour la réalisation des tissés ou non-tissés (lesquelles fibres présentent une longueur de l'ordre de quelques mm). Elles permettent de régler la tenue mécanique et assurent la percolation électronique au sein de la structure.

Les additifs du type fibres de carbone ou nanotubes de carbone assurent, au final, un rôle de renfort mécanique, ce qui va permettre d'éviter l'apparition de craquelures lors de l'étape du séchage et ainsi une mauvaise qualité de l'électrode positive. Il n'est ainsi plus nécessaire de recourir, dans l'électrode positive, à une quantité de liant organique aussi importante pour limiter ce phénomène.

Qui plus est, ces additifs vont permettre une pré-agglomération de la poudre de noir de carbone et/ou carbone activé lors de l'étape de carbonisation, moyennant quoi il résultera une poudre de particules résultant de l'agglomération du noir de carbone et/ou carbone activé et des nanotubes de carbone et/ou fibres de carbone.

Les liants organiques carbonés utilisables dans le premier mélange sont avantageusement des polymères présentant une haute teneur en carbone, par exemple, une teneur en carbone supérieure à 50% et peuvent être, par exemple, des résines phénoliques, qui résultent, classiquement, de la polycondensation d'un monomère phénolique et du formaldéhyde, ce qui leur vaut d'être aussi appelées résines phénol-formaldéhydes ou résines formophénoliques.

D'autres liants que les résines phénoliques peuvent convenir tels que des liants cellulosiques (tel qu'une carboxyméthylcellulose), des liants époxydes ou des liants polyacétates (tel qu'un polyacétate de vinyle).

Concernant le solvant, il peut s'agir d'eau, d'un solvant organique, tel qu'un solvant alcoolique ou un mélange de solvants organiques ou encore d'un mélange comprenant un ou plusieurs solvants organiques et de l'eau.

Les proportions de ces ingrédients dans la composition peuvent être les suivantes :
- de 5 à 50% en masse pour l'additif du type noir de carbone et/ou carbone activé ;
- de 1 à 20% en masse pour l'additif du type nanotubes de carbone et/ou fibres de carbone ;
- de 1 à 20% en masse pour le liant organique carboné ;
- de 50 à 98% en masse pour le solvant ;
le pourcentage en masse étant exprimé par rapport à la masse totale des ingrédients.

Le procédé de l'invention comprend une étape de carbonisation du premier mélange obtenu à l'étape a), qui va permettre l'élimination du liant organique carboné et du solvant et ne laisser subsister de ces composés que du carbone, par exemple du carbone amorphe, lequel va assurer le rôle de ciment entre le noir de carbone et/ou carbone activé et les nanotubes de carbone et/ou les fibres de carbone formant ainsi des particules solides résultant de l'agglomération du noir de carbone et/ou carbone activé et des nanotubes et/ou fibres de carbone. Qui plus est, cette étape peut permettre la formation de particules exclusivement carbonées présentant une surface spécifique importante (par exemple, supérieure à 1000 m²/g).

L'étape de carbonisation est réalisée, avantageusement, sous atmosphère inerte, par exemple, sous atmosphère d'argon, pour éviter tout phénomène d'oxydation. Qui plus est, elle est réalisée, classiquement, à une température et un durée efficaces nécessaires à la transformation en carbone des composés organiques, cette température et cette durée pouvant être fixées aisément par l'homme du métier en analysant par des techniques classiques la composition du produit obtenu, le chauffage pouvant être arrêté dès lors que seul du carbone subsiste dans le mélange.

A titre d'exemple, l'étape de carbonisation peut être réalisée à une température allant de 800 à 1500°C pendant une durée allant de 1 minute à 10 heures.

Pour accélérer le processus de carbonisation, l'étape de carbonisation en tant que telle peut être précédée d'une étape de séchage du premier mélange obtenu en a) pour éliminer au moins en partie le solvant suivie d'une étape de broyage du matériau sous forme de grains.

De cette étape de carbonisation subsiste une poudre constituée de particules résultant de l'agglomération du noir de carbone et/ou carbone activé et des nanotubes de carbone et/ou fibres de carbone liés entre eux par du carbone amorphe issu de la carbonisation.

La poudre ainsi formée est ensuite mise en contact avec du soufre formant ainsi une deuxième mélange. Il s'entend qu'il s'agit de soufre élémentaire, lequel constitue le matériau actif de l'électrode positive, à savoir le matériau impliqué directement dans les réactions de charge ou de décharge pour les accumulateurs lithium-soufre. Cette étape de mise en contact peut être accompagnée d'un broyage concomitant, auquel cas cette étape peut s'effectuer dans un broyeur, par exemple, un broyeur à jarre, ce qui permettra d'obtenir un mélange intime des ingrédients mais aussi d'obtenir une bonne granulométrie de la poudre, afin de simplifier la mise en dispersion ultérieure.

Entre l'étape de formation du deuxième mélange c) et l'étape de mise en dispersion d), le procédé peut comprendre une étape intercalaire consistant à porter, de préférence, sous atmosphère inerte, le deuxième mélange à une température supérieure à la température de fusion du soufre (par exemple, une température de 150°C) puis à le laisser revenir à température ambiante. Par ce biais, le soufre ainsi fondu va diffuser par capillarité dans les particules du mélange et former un mélange composite intime des différents ingrédients en présence.

Le deuxième mélange est ensuite mis en dispersion dans un liant organique, lequel liant organique peut être en solution dans un solvant organique ou un solvant aqueux.

Concernant le liant organique, il peut être choisi parmi :
- des liants polymériques appartenant à la catégorie des polymères cellulosiques, tels que de la carboxyméthylcellulose (connu sous l'abréviation CMC), de la méthylcellulose (connu sous l'abréviation MC) ;
- des liants polymériques appartenant à la catégorie des polymères éthyléniques fluorés, tel que du polytétrafluoroéthylène (connu sous l'abréviation PTFE) ;
- des liants polymériques appartenant à la catégorie des poly(oxydes d'éthylène) (connus sous l'abréviation POE) ;
- des liants polymériques appartenant à la catégorie des polymères vinyliques, tels qu'un poly(alcool vinylique) (connu sous l'abréviation PVA) ; et
- des mélanges de ceux-ci.

Le liant organique peut permettre la cohésion entre les différents ingrédients du deuxième mélange, une fois l'électrode positive achevée.

Le liant organique peut être présent, dans la dispersion, à hauteur d'une teneur allant de 5 à 30% de la masse totale des ingrédients de la dispersion (hors solvant, le cas échéant), une teneur spécifique avantageuse étant de 5%.

La dispersion est ensuite déposée sur un substrat et, plus spécifiquement un substrat destiné à constituer le substrat collecteur de courant de l'électrode positive puis séchée, le produit résultant constituant l'électrode positive en tant que tel.

Le dépôt de la dispersion peut être envisagé par différentes techniques, telles que :
- le trempage-retrait (connu sous la terminologie anglaise « dip-coating ») ;
- l'enduction centrifuge (connue sous la terminologie anglaise « spin-coating ») ;
- l'enduction laminaire (connue sous la terminologie anglaise « laminar-flow-coating ou meniscus coating ») ;
- la pulvérisation ou l'épandage (connue sous la terminologie anglaise « spray-coating ») ;
- l'engobage (connu sous la terminologie anglaise « slip coating») ;
- l'enduction au rouleau (connue sous la terminologie « roll to roll process ») ;
- l'enduction au pinceau (connue sous la terminologie anglaise « paint coating ») ;
- la sérigraphie (connue sous la terminologie anglaise « screen printing ») ; ou
- les techniques utilisant une racle pour le dépôt (connue sous la terminologie anglaise « blade-coating »).

Quant au séchage, il est réalisé de sorte à éliminer les composés organiques volatils de la dispersion.

Le produit résultant du procédé est une électrode positive pour accumulateur lithium-soufre et est destiné à être assemblé dans un accumulateur lithium-soufre comprenant au moins une cellule comprenant :
- une électrode positive obtenue selon le procédé de l'invention tel que défini ci-dessus ;
- une électrode négative ; et
- un électrolyte conducteur d'ions lithium disposé entre ladite structure et ladite électrode négative.

Nous précisons les définitions suivantes.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

L'électrode négative peut être autosupportée (c'est-à-dire ne nécessitant pas d'être apposée à un support, tel qu'un support collecteur de courant) ou peut comprendre, de préférence, un substrat collecteur de courant sur lequel est placé au moins le matériau actif de l'électrode négative, ce matériau actif pouvant être avantageusement du lithium métallique.

Le substrat collecteur de courant peut être en un matériau métallique (composé d'un seul élément métallique ou d'un alliage d'un élément métallique avec un autre élément), se présentant, par exemple, sous forme d'une plaque ou feuillard, un exemple spécifique d'un substrat collecteur en courant pouvant être un feuillard en inox, en nickel ou en cuivre. Le substrat collecteur de courant peut être également en un matériau carboné.

L'électrolyte est un électrolyte conducteur d'ions lithium, cet électrolyte pouvant être, en particulier, un électrolyte liquide comprenant au moins un solvant organique et au moins un sel de lithium.

Le ou les solvants organiques peuvent être, par exemple, un solvant comportant une ou plusieurs fonctions éther, nitrile, sulfone et/ou carbonate avec, par exemple, une chaîne carbonée pouvant comporter de 1 à 10 atomes de carbone.

A titre d'exemples de solvants comportant une fonction carbonate, on peut citer :
- des solvants carbonates cycliques, tel que le carbonate d'éthylène (symbolisé par l'abréviation EC), le carbone de propylène (symbolisé par l'abréviation PC).
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC).

A titre d'exemple de solvants comportant une fonction éther, on peut citer les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O-[CH₂CH₂O]ₙ-OCH₃ (n étant un entier allant de 1 et 10), tel que le diméthyléther de tétraéthylèneglycol (symbolisé par l'abréviation TEGDME) et les mélanges de ceux-ci.

De préférence, le solvant organique est un solvant éther ou un mélange de solvants éthers.

Le sel de lithium peut être choisi dans le groupe constitué par LiPF₆, LiClO₄, LiBF₄, LiAsF₆, Lil, LiNO₃ LiR_{f}SO₃ (avec R_{f} correspondant à un groupe perfluoroalkyle comprenant de 1 à 8 atomes de carbone), LiN(CF₃SO₂)₂ (appelé également bis[(trifluorométhyl)sulfonyl]imidure de lithium correspondant à l'abréviation LiTFSI), LiN(C₂F₅SO₂)₂ (appelé également bis[(perfluoroéthyl)sulfonyl]imidure de lithium correspondant à l'abréviation LiBETI), LiCH₃SO₃, LiB(C₂O₄)₂ (appelé également bis(oxalato)borate de lithium ou LiBOB) et les mélanges de ceux-ci, la préférence portant sur un mélange LiTFSI/LiNO₃.

Le sel de lithium peut être présent, dans l'électrolyte, selon une concentration allant de 0,25 M à 2 M, par exemple, 1M.

En outre, lorsque l'accumulateur fonctionne selon une configuration de catholyte, l'électrolyte peut comprendre au moins un composé polysulfure de lithium de formule Li₂Sₙ avec n étant un entier allant de 2 à 8.

Ce composé constitue ainsi la source de soufre pour l'électrode positive.

Dans ce cas, la quantité de composé polysulfure de lithium introduite dans l'électrolyte est adaptée en fonction de la surface spécifique de la structure obtenue selon le procédé de l'invention, celle-ci dictant la quantité de matériau actif qu'il est possible de déposer. Par exemple, le composé polysulfure de lithium peut être dissous dans l'électrolyte à une concentration allant de 0,25 mol.L⁻¹ à la concentration de saturation.

L'électrolyte, lorsqu'il comprend au moins un composé polysulfure de lithium tel que défini ci-dessus, peut être qualifié de « catholyte ».

Dans les accumulateurs lithium-soufre, l'électrolyte liquide susmentionné peut être amené, dans les cellules électrochimiques des accumulateurs lithium-soufre, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte peut être également un électrolyte gélifié, ce qui correspond, dans ce cas, à un électrolyte comprenant un solvant organique et un sel de lithium, similaires à ceux décrits ci-dessus, qui imprègne une matrice poreuse qui gonfle en absorbant l'électrolyte, une telle matrice pouvant être un polyoxyde d'éthylène (connu sous l'abréviation POE), un polyacrylonitrile (connu sous l'abréviation PAN), un polyméthacrylate de méthyle (connu sous l'abréviation PMMA), un polyfluorure de vinylidène (connu sous l'abréviation PVDF) ou leurs dérivés.

L'invention va, à présent, être décrite en référence aux modes de réalisation particuliers définis ci-dessous en référence aux figures annexées.

### BRÈVE DESCRIPTION DES DESSINS

La figure 1 est un graphique illustrant l'évolution du potentiel E (en V) en fonction de la capacité C (en u.a).
La figure 2 est un graphique illustrant l'évolution de la capacité de décharge C (en mAh/g) en fonction du nombre de cycles pour deux accumulateurs mis en œuvre selon l'exemple exposé ci-dessous.

### EXPOSÉ DÉTAILLÉ DE MODES DE RÉALISATION PARTICULIERS

### Exemple

Le présent exemple illustre la préparation d'une électrode positive conformément au procédé de l'invention.

Pour ce faire, il est préparé une composition par mélange, dans 400 g d'éthanol, de noir de carbone Ketjenblack® EC-600 JD (4 g), de résine phénolique (1g). Après agitation du mélange à 4000 tours/min pendant 15 minutes, 1 g de nanotubes de carbone est ajouté. Le mélange résultant est agité pendant 15 minutes à 4000 tours/minute. Puis l'éthanol est évaporé pour obtenir un matériau sec.

Le matériau ainsi obtenu est réduit en grains pour être carbonisé dans un four tubulaire à 950°C sous argon pendant 1 heure. Cette étape permet de transformer la résine phénolique en carbone et de lier entre eux les agglomérats comprenant le noir de carbone et les nanotubes de carbone, ces agglomérats entièrement constitués de carbone présentant une forte cohésion mécanique et une surface active importante (supérieure à 1000 m²/g selon la méthode BET).

Le matériau carboné ainsi architecturé se présentant sous forme d'une poudre est ensuite mélangé avec du soufre élémentaire pendant 1 heure dans un broyeur à jarre, moyennant quoi l'on obtient un mélange homogène. Le ratio massique de mélange entre le soufre et le carbone est de 2/1.

Le mélange est ensuite soumis à un chauffage de 150°C pendant 1 heure, ce qui fait fondre le soufre à la surface des particules de carbone.

Le mélange ainsi obtenu à l'issue de ce traitement thermique est utilisé pour la fabrication d'une composition liquide (ou encre) comprenant 95% massique dudit mélange et 5% massique de carboxyméthylcellulose à 2% dans l'eau.

La composition ainsi formulée est enduite sur une feuille d'aluminium et séchée à 80°C sous air, moyennant quoi il résulte une électrode positive déposée sur un collecteur de courant constitué par la feuille d'aluminium. Le grammage de l'électrode obtenu est d'environ 4,5 mg de soufre/cm².

A titre comparatif, une électrode positive de référence est réalisée par enduction à la racle d'une feuille d'aluminium avec une composition comprenant :
- 80% massique de soufre élémentaire ;
- 10% de noir de carbone Super P® ;
- 10% de carboxyméthylcellulose.
suivie d'un séchage à 80°C sous air.

Le grammage en soufre de l'électrode est d'environ 4,5 mg de soufre/cm².

Deux accumulateurs sont assemblés avec respectivement l'électrode positive conforme au procédé de l'invention et l'électrode de référence.

Chacun de ces accumulateurs comporte :
- comme électrode négative, une électrode en lithium métallique ;
- comme électrolyte, un mélange diméthyléther de tétraéthylèneglycol/dioxolane (TEGDME/DIOX) (1 :1 en volume) comprenant du LiTFSI (1 M) et du LiNO₃ (0,1 M).

Pour ces deux accumulateurs a été déterminée l'évolution de la capacité de décharge C (en mAh/g) en fonction du nombre de cycles N, les résultats étant reportés sur la figure 2 jointe en annexe (courbe a) pour l'accumulateur comportant l'électrode positive obtenue conformément au procédé de l'invention et courbe b) pour l'accumulateur comportant l'électrode positive de référence).

Il ressort que l'accumulateur comportant l'électrode obtenue conformément au procédé de l'invention présente de meilleures performances en termes de capacité de décharge que l'accumulateur comportant l'électrode de référence.

## Revendications

1. Procédé de préparation d'une électrode positive pour batterie lithium-soufre comprenant les étapes suivantes :
a) une étape de préparation d'un premier mélange par mise en contact d'un additif carboné du type noir de carbone et/ou carbone activé ; d'un additif carboné choisi parmi les nanotubes de carbone, les fibres de carbone et les mélanges de ceux-ci ; d'un liant organique carboné et d'un solvant ;
b) une étape de carbonisation dudit mélange, moyennant quoi il résulte une poudre comprenant des agglomérats de noir de carbone et/ou carbone activé et de nanotubes de carbone et/ou fibres de carbone ;
c) une étape de mise en contact de la poudre obtenue en b) avec du soufre formant ainsi un deuxième mélange ;
d) une étape de mise en dispersion dudit deuxième mélange dans un liant organique ;
e) une étape de dépôt sur un substrat de la dispersion ainsi obtenue ; et
f) une étape de séchage de ladite dispersion ainsi déposée.

2. Procédé selon la revendication 1, dans lequel les fibres de carbone sont choisies parmi les fibres de carbone broyées, les fibres de carbone obtenues en phase vapeur et les mélanges de celles-ci.

3. Procédé selon la revendication 1 ou 2, dans lequel le liant organique carboné de l'étape a) est une résine phénolique.

4. Procédé selon l'une quelconque des revendications précédentes, dans lequel l'étape de carbonisation est réalisée sous atmosphère inerte.

5. Procédé selon l'une quelconque des revendications précédentes, comprenant, en outre, entre l'étape c) et l'étape d), une étape intercalaire consistant à porter le deuxième mélange à une température supérieure à la température de fusion du soufre puis à le laisser revenir à température ambiante.

6. Procédé selon l'une quelconque des revendications précédentes, dans lequel le liant organique de l'étape d) est choisi parmi :
- des liants polymériques appartenant à la catégorie des polymères cellulosiques, tels que de la carboxyméthylcellulose, de la méthylcellulose ;
- des liants polymériques appartenant à la catégorie des polymères éthyléniques fluorés, tel que du polytétrafluoroéthylène ;
- des liants polymériques appartenant à la catégorie des poly(oxydes d'éthylène) ;
- des liants polymériques appartenant à la catégorie des polymères vinyliques, tels qu'un poly(alcool vinylique) ; et
- des mélanges de ceux-ci.

## Patentansprüche

1. Verfahren zur Herstellung einer positiven Elektrode für eine Lithium-Schwefel-Batterie, umfassend die folgenden Schritte:
a) einen Schritt des Herstellens eines ersten Gemischs durch Inkontaktbringen eines Kohlenstoffadditivs vom Typ Ruß und/oder Aktivkohle; eines Kohlenstoffadditivs, ausgewählt aus Kohlenstoff-Nanoröhrchen, Kohlenstofffasern und deren Gemischen; eines organischen Kohlenstoffbindemittels und eines Lösungsmittels;
b) einen Schritt des Karbonisierens des Gemisches, wodurch ein Pulver erhalten wird, das Agglomerate von Ruß und/oder Aktivkohle und Kohlenstoff-Nanoröhrchen und/oder Kohlenstofffasern enthält;
c) einen Schritt des Inkontaktbringens des in b) erhaltenen Pulvers mit Schwefel, wodurch ein zweites Gemisch gebildet wird;
d) einen Schritt des Dispergierens des zweiten Gemisches in einem organischen Bindemittel;
e) einen Schritt des Abscheidens der so erhaltenen Dispersion auf einem Substrat; und
f) einen Schritt des Trocknens der so abgeschiedenen Dispersion.

2. Verfahren nach Anspruch 1, wobei
die Kohlenstofffasern ausgewählt sind aus gemahlenen Kohlenstofffasern, Dampfphasen-gewachsenen Kohlenstoffasern und deren Gemischen.

3. Verfahren nach Anspruch 1 oder 2, wobei
das organische Kohlenstoffbindemittel aus Schritt a) ein Phenolharz ist.

4. Verfahren nach einem der vorangehenden Ansprüche, wobei
der Schritt des Karbonisierens unter inerter Atmosphäre durchgeführt wird.

5. Verfahren nach einem der vorangehenden Ansprüche, ferner umfassend zwischen Schritt c) und Schritt d) einen Zwischenschritt, der darin besteht, das zweite Gemisch auf eine Temperatur zu bringen, die höher als die Schmelztemperatur von Schwefel ist, und es dann auf Raumtemperatur zurückkehren zu lassen.

6. Verfahren nach einem der vorangehenden Ansprüche,
wobei das organische Bindemittel aus Schritt d) ausgewählt ist aus:
- polymeren Bindemitteln, die zur Kategorie der Cellulosepolymere, wie beispielsweise Carboxymethylcellulose, Methylcellulose, gehören;
- polymeren Bindemitteln, die zur Kategorie der fluorierten ethylenischen Polymere, wie beispielsweise Polytetrafluorethylen, gehören;
- polymeren Bindemitteln, die zur Kategorie der Polyethylenoxide gehören;
- polymeren Bindemitteln, die zur Kategorie der Vinylpolymere, wie beispielsweise Polyvinylalkohol, gehören; und
- deren Gemischen.

## Claims

1. Method for preparing a positive electrode for a lithium-sulfur battery, comprising the following steps:
a) a step of preparing a first mixture by placing a carbon additive which is carbon black and/or activated carbon; a carbon additive chosen from carbon nanotubes, carbon fibres and mixtures thereof; a carbon organic binder, and a solvent in contact;
b) a step of carbonising said mixture, by means of which the result is a powder comprising agglomerates of carbon black and/or activated carbon and of carbon nanotubes and/or carbon fibres;
c) a step of placing the powder obtained in b) in contact with sulfur thus forming a second mixture;
d) a step of dispersing said second mixture in an organic binder;
e) a step of depositing the dispersion thus obtained on a substrate; and
f) a step of drying said dispersion thus deposited.

2. Method according to claim 1, wherein the carbon fibres are chosen from ground carbon fibres, carbon fibres obtained in vapour phase and mixtures thereof.

3. Method according to claim 1 or 2, wherein the carbon organic binder of step a) is a phenolic resin.

4. Method according to any one of the previous claims, wherein the carbonisation step is carried out in an inert atmosphere.

5. Method according to any one of the previous claims, further comprising, between step c) and step d), an intermediate step involving bringing the second mixture to a temperature greater than the melting temperature of the sulfur and then letting it come back to ambient temperature.

6. Method according to any one of the previous claims, wherein the organic binder of step d) is chosen from:
- polymer binders belonging to the category of cellulosic polymers, such as carboxymethylcellulose, methylcellulose;
- polymer binders belonging to the category of fluorinated ethylene polymers, such as polytetrafluoroethylene;
- polymer binders belonging to the category of poly(ethylene oxides);
- polymer binders belonging to the category of vinyl polymers, such as polyvinyl alcohol; and
- mixtures thereof.
